# EUROPEAN PATENT SPECIFICATION

(11) **EP 4 159 808 B1**
(45) Date of publication and mention of the grant of the patent: **22.04.2026**
(21) Application number: 22198279.6
(22) Date of filing: 28.09.2022
(51) Int. Cl.: C08L 15/00, B60C 1/00, C08L 9/06, C08K 3/22, C08L 45/00, C08L 57/02, C08L 7/00, C08L 9/00, C08K 3/36, C08K 3/04, C08C 19/22, C08C 19/25, C08C 19/20

(54) **RUBBER COMPOSITION AND TIRE**
KAUTSCHUKZUSAMMENSETZUNG UND REIFEN
COMPOSITION DE CAOUTCHOUC ET PNEUMATIQUE

(30) Priority: 30.09.2021 US 202163250363 P; 20.07.2022 US 202217813740
(43) Date of publication of application: 05.04.2023
(73) Proprietor: The Goodyear Tire & Rubber Company, Akron, OH 44316 (US)
(72) Inventor: MILAN, Marie-Laure Stéphanie, 8043 Strassen (LU); DELVILLE, Jerome Joel Daniel, 54430 Rehon (FR); JACOBY, Claude Charles, 6615 Wasserbillig (LU); KANZ, Carlo, 8249 Mamer (LU); KAES, Christian Jean-Marie, 9184 Schrondweiler (LU); AGUIAR DA SILVA, Cecilia, 7264 Helmsange (LU)
(74) Representative: Kutsch, Bernd

(56) References cited:
- EP-A1- 2 985 311
- CN-A- 113 004 594
- CN-B- 103 467 802

## Description

### Field of the Invention

The present invention relates to a rubber composition and to a tire. The rubber composition is used in a tire, for instance in the tire tread.

### Background of the Invention

In the development of summer tires, in particular of low rolling resistance summer tires, it is a challenge to further improve the balance between grip, including dry and/or wet grip, and rolling resistance. At the same time the tire should be robust. EP2985311 discloses a tire comprising a rubber composition that achieves a balanced improvement in wet grip performance, abrasion resistance, and processability.

While many improvements have been made in this area over the past decades, significant room for improving the balance of the above mentioned properties remains.

### Summary of the Invention

The invention relates to a tire in accordance with claim 1.

Dependent claims refer to preferred embodiments of the invention.

One object of the present invention is to provide a tire comprising a rubber composition having an advantageous balance of improved grip and limited hysteresis.

Another object of the invention is to provide a tire comprising a rubber composition that has a sufficient tensile strength, good grip properties and limited hysteresis.

Yet another object of the invention is to provide a tire comprising a rubber composition providing good wet and dry grip, at limited hysteresis (or rolling resistance respectively), optionally with a sufficient tensile strength.

In a first preferred aspect of the invention, a tire comprising a rubber composition is disclosed comprising 70 phr to 100 phr of at least one styrene butadiene rubber, 0 phr to 30 phr of at least one (further) diene-based rubber, from 40 phr to 200 phr of at least one filler, at least 5 phr of aluminum hydroxide, and at least 10 phr of at least one (hydrocarbon) resin selected from one or more of dicyclopentadiene (DCPD) resins, cyclopentadiene (CPD) resins, and C5 resins.

It has been found that the combination of aluminum hydroxide and the claimed resin types results in a surprisingly improved balance of rolling resistance and wet grip. Moreover, also tread wear can be further improved. Such a combination can be of particular interest for low rolling resistance tires, e.g., for low rolling resistance passenger car tires.

In a preferred aspect of the invention, the rubber composition comprises from 5 phr to 80 phr of the aluminum hydroxide, preferably from 10 phr to 40 phr of the aluminum hydroxide.

In a preferred aspect of the invention, the rubber composition comprises from 15 phr to 80 phr of the resin, preferably from 15 phr to 40 phr, or even more preferably from 15 phr to 35 phr of the resin.

In a preferred aspect of the invention, the resin is an at least partially hydrogenated resin, preferably a fully hydrogenated resin.

In a preferred aspect of the invention, the resin is aromatically or C9 modified.

In a preferred aspect of the invention, the resin is a hydrogenated and C9 modified resin, preferably a hydrogenated and C9 modified DCPD or CPD resin.

In a preferred aspect of the invention, the resin has a glass transition temperature within a range of from 35°C to 65°C. It is preferred that the resin has a relatively high but still limited glass transition temperature.

A glass transition temperature of a resin is determined herein as a peak midpoint by a differential scanning calorimeter (DSC) at a temperature rate of increase of 10°C per minute, according to ASTM D6604 or equivalent.

In a preferred aspect of the invention, the resin is selected from one or more of C5 resins, CPD resins, DCPD resins, C9 modified C5 resins, C9 modified CPD resins, and C9 modified DCPD resins. Optionally, these resins may be partially or fully hydrogenated.

In a preferred aspect of the invention, the resin is selected from one or more of C9 modified CPD and C9 modified DCPD resins.

In a preferred aspect of the invention, the resin has an aromatic proton content within a range of 5% to 15%, preferably within a range of 8% to 12%. This content may for instance be determined by NMR, as known by the person skilled in the art.

In a preferred aspect of the invention, the resin has a softening point within a range of from 88°C to 110°C, determined herein according to ASTM E28, or equivalent, which might sometimes be referred to as a ring and ball softening point.

In a preferred aspect of the invention, the resin has a weight average molecular weight Mw within a range of 500 g/mol to 800 g/mol, as determined by gel permeation chromatography (GPC) using polystyrene calibration standards according to ASTM 5296-11 or equivalent.

In a preferred aspect of the invention, the rubber composition has a glass transition temperature within a range of from -25°C to -15°C, determined as described herein below.

In a preferred aspect of the invention, the at least one styrene butadiene rubber is a solution polymerized styrene butadiene rubber; and/or the diene-based rubber is a polyisoprene, preferably one or more of synthetic polyisoprene and natural rubber.

In a preferred aspect of the invention, the rubber composition comprises i) a first styrene butadiene rubber (preferably solution polymerized) having a glass transition temperature within a range of -51°C to -86°C, and ii) a second styrene butadiene rubber (preferably solution polymerized) having a glass transition temperature within a range of -10°C to -45°C. Preferably, at least one (or both) of said first and second styrene butadiene rubbers is functionalized for the coupling to the filler (such as to carbon black or to silica), in particular to the silica.

In a preferred aspect of the invention, the rubber composition comprises from 40 phr to 60 phr of the first styrene butadiene rubber and from 30 phr to 50 phr of the second styrene butadiene rubber.

In a preferred aspect of the invention, the first and the second styrene butadiene rubbers comprise at least one functional group configured for the coupling to the silica.

In a preferred aspect of the invention, at least one of the first and the second styrene butadiene rubbers comprise at least one functional group configured for the coupling to the silica, and wherein said functional group is selected from one or more of siloxy, alkoxy, amino, alkylsiloxy, tin amino, amino siloxane, and amino silane and thiol groups.

In a preferred aspect of the invention, one styrene butadiene rubber of the first and the second styrene butadiene rubbers is functionalized with an amino silane group and another one of the first and the second styrene butadiene rubbers is functionalized with an amino siloxane group.

In a preferred aspect of the invention, one of the first and second styrene butadiene rubbers is functionalized with at least one thiol group and another one of the first and second styrene butadiene rubbers is functionalized with at least one of an amino silane or amino siloxane group. Preferably, the styrene butadiene rubber having the lower Tg is functionalized with the thiol group.

In a preferred aspect of the invention, the first styrene butadiene rubber has a glass transition temperature within a range of from -20°C to -35°C, and the second styrene butadiene rubber has a glass transition temperature within a range offrom - 55°C to -69°C.

In a preferred aspect of the invention, the filler is comprised predominantly of silica.

In a preferred aspect of the invention, the filler comprises less than 10 phr of carbon black, preferably less than 5 phr of carbon black, and at least 40 phr of silica.

In a preferred aspect of the invention, the rubber composition comprises at most 85 phr of silica. A limited silica or filler amount is in particular desired for low rolling resistance applications or even ultra low rolling resistance applications.

In a preferred aspect of the invention, the aluminum hydroxide has one or more of the following features: (i) a D50 particle diameter within a range of 0.2 µm and 5 µm, and (ii) a BET surface area within a range of 1 m²/g to 20 m²/g.

The aluminum hydroxide particle diameters are determined with a Zetasizer^{™} Nano S from Malvern using dynamic light scattering based on ISO 22412 or equivalent.

The BET surface area of aluminum hydroxide particles is determined in accordance with ISO 9277 or equivalent.

In a preferred aspect of the invention, the silica has a BET surface area within a range of 150 m²/g and 220 m²/g. In particular, high surface area silicas are preferred herein.

In a preferred aspect of the invention, the rubber composition comprises one or more of: (i) 0 phr to less than 5 phr of further resins apart from said hydrocarbon resin; and (ii) 0 phr to less than 5 phr of oil. Thus, in such a preferred embodiment, the amounts of further plasticizers and/or resins or oils are limited. Preferably, the oil content is less than 1 phr or 0 phr.

In a preferred aspect of the invention, said rubber may be functionalized (preferably end functionalized) with a group comprising at least one thiol group and at least one alkoxy group.

In a preferred aspect of the invention, the rubber composition comprises from 1 phr to 4 phr of a vegetable oil having a glass transition temperature within a range of -75°C to -100°C, preferably within a range of -75°C to -90°C.

The glass transition temperature of an oil is determined as a peak midpoint by a differential scanning calorimeter (DSC) at a temperature rate of increase of 10°C per minute, according to ASTM E1356 or equivalent.

In a preferred aspect of the invention, the rubber composition comprises predominantly silica as a filler, wherein the composition further comprises a mercapto silane (preferably a blocked mercapto silane, such as 3-(octanoylthio)-1-propyltriethoxysilane) within a range of 1 phr to 20 phr, preferably from 2 phr to 10 phr.

In a preferred aspect of the invention, the rubber composition further comprises an α,ω-bis(N,N'-dihydrocarbylthiocarbamamoyldithio)alkane, preferably within a range of 0.5 phr to 5 phr, or even more preferably from 1 phr to 4 phr.

In a preferred aspect of the invention, the α,ω-bis(N,N'-dihydrocarbylthiocarbamamoyldithio)alkane is selected from the group consisting of 1,2-bis(N,N'-dibenzylthiocarbamoyl-dithio)ethane; 1,3-bis(N,N'-dibenzylthiocarbamoyldithio)propane; 1,4-bis(N,N'-dibenzylth-iocarbamoyldithio)butane; 1,5-bis(N,N'-dibenzylthiocarbamoyl-dithio)pentane; 1,6-bis(N,N'-dibenzylthiocarbamoyldithio)hexane; 1,7-bis(N,N'-dibenzylth-iocarbamoyldithio)heptane; 1,8-bis(N,N'-dibenzylthiocarbamoyl-dithio)octane; 1,9-bis(N,N'-dibenzylthiocarbamoyldithio)nonane; and 1,10-bis(N,N'-dibenzylthiocarbamoyldithio)decane. Preferably, the α,ω-bis(N,N'-dihydrocarbylthiocarbamamoyldithio)alkane is 1,6-bis(N,N'-dibenzylthiocarbamoyldithio)hexane.

In a preferred aspect of the invention, the rubber composition comprises from 0.5 phr to 15 phr, preferably from 0.5 to 10 phr, or more preferably from 1 phr to 9 phr, or even more preferably from 1 phr to 5 phr of a rosin based resin. In particular, it has been found that even surprisingly small amounts of the rosin based resin can significantly support improved wet grip and/or wet handling performance. Using such small amounts of rosin is also positive from a costs perspective.

In a preferred aspect of the invention, the rosin based resin (or rosin acid based resin) is based on one or more of gum rosin and dimerized gum rosin.

In a preferred aspect of the invention, the rosin based resin has a softening point within a range of 70°C to 160°C.

A softening point of a resin is determined herein according to ASTM E28, or equivalent, which might sometimes be referred to as a ring and ball softening point.

In a preferred aspect of the invention, the rosin based resin has an acid number within a range of 130 to 180.

In a preferred aspect of the invention, the rosin based resin is a gum rosin, which has optionally a softening point within a range of 65°C to 90°C, preferably from 70°C to 85°C, and preferably has an acid number within a range of 140 to 180.

In a preferred aspect of the invention, the rosin based resin is a dimerized gum rosin, optionally having a softening point within a range of 130°C to 160°C, preferably from 140°C to 150°C, and has preferably an acid number within a range of 130 to 160 and even more preferably from 140 to 150.

In a preferred aspect of the invention, the rosin based resin is predominantly comprised of abietic acid. In case it is dimerized, it is predominantly comprised of dimerized abietic acid.

In a preferred aspect of the invention, the rosin based resin is predominantly based on abietic acid.

Optionally, the term rosin based resin can be replaced by rosin or rosin resin.

In a preferred aspect of the invention, the rubber composition comprises from 20 phr to 80 phr of a resin (or a hydrocarbon resin).

In a preferred aspect of the invention, the rubber composition may include at least one and/or one additional diene-based rubber. Representative synthetic polymers may be the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g. acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubber or elastomers may be in general natural rubber, synthetic polyisoprene, polybutadiene and SBR including SSBR.

In a preferred aspect of the invention, the composition comprises less than 5 phr of natural rubber and/or polyisoprene or is essentially free /free of natural rubber and/or polyisoprene.

A combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers, and emulsion polymerization prepared butadiene/acrylonitrile copolymers.

In a preferred aspect of the invention, an emulsion polymerization derived styrene-butadiene rubber (ESBR) may be used having a styrene content of 20 to 28 percent bound styrene or, for some applications, an ESBR having a medium to relatively high bound styrene content, namely, a bound styrene content of 30 to 45 percent. In many cases the ESBR will have a bound styrene content which is within the range of 26 to 31 percent. By emulsion polymerization prepared ESBR, it may be meant that styrene and 1,3-butadiene are copolymerized as an aqueous emulsion. Such are well known to those skilled in such art. The bound styrene content can vary, for example, from 5 to 50 percent. In one aspect, the ESBR may also contain acrylonitrile to form a terpolymer rubber, as ESBAR, in amounts, for example, of 2 to 30 weight percent bound acrylonitrile in the terpolymer. Emulsion polymerization prepared styrene/butadiene/acrylonitrile copolymer rubbers containing 2 to 40 weight percent bound acrylonitrile in the copolymer may also be contemplated as diene-based rubbers.

In a preferred aspect of the invention, a solution polymerization prepared SBR (SSBR) is used. Such an SSBR may for instance have a bound styrene content in a range of 5 to 50 percent, preferably 9 to 36 percent, and most preferably 26 to 31 percent. The SSBR can be conveniently prepared, for example, by anionic polymerization in an inert organic solvent. More specifically, the SSBR can be synthesized by copolymerizing styrene and a 1,3-butadiene monomer in a hydrocarbon solvent utilizing an organo lithium compound as the initiator. In still another embodiment, the solution styrene butadiene rubber is a tin-coupled polymer. In still another embodiment, the SSBR is functionalized for improved compatibility with silica. In addition, or alternatively, the SSBR is thio-functionalized. This helps to improve stiffness of the compound and/or its hysteresis behavior. Thus, for instance, the SSBR may be a thio-functionalized, tin-coupled solution polymerized copolymer of butadiene and styrene.

In a preferred aspect of the invention, a synthetic or natural polyisoprene rubber is used. Synthetic cis-1,4-polyisoprene and natural rubber are as such well known to those having skill in the rubber art. The cis 1,4-microstructure content is preferably at least 90% and is typically at least 95% or even higher.

In a preferred aspect of the invention, cis-1,4-polybutadiene rubber (BR or PBD) is used. Suitable polybutadiene rubbers may be prepared, for example, by organic solution polymerization of 1,3-butadiene. The BR is characterized, for example, by having at least a 90 percent cis-1,4-microstructure content ("high cis" content) and a glass transition temperature (Tg) in a range of from -95 to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646**.**

A glass transition temperature, or Tg, of an elastomer or elastomer/rubber composition, where referred to herein, represents the glass transition temperature(s) of the respective elastomer or elastomer composition in its uncured state or possibly a cured state in the case of an elastomer composition.

Tg is determined by the midpoint or inflection point of the step observed in association with the glass transition, as measured using a differential scanning calorimeter (DSC) at a temperature change rate of 10°C per minute, according to ASTM D3418.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. In an example, the composition may further comprise from 1 phr to 10 phr, optionally from 1 to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. The terms "compound" and "composition" and "formulation" may be used herein interchangeably, unless indicated otherwise.

In a preferred aspect of the invention, the rubber composition may also include one or more additional oils, in particular (additional) processing oils. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic (PCA) content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of (non-aminated and non-epoxidized) vegetable oils that can be used include soybean oil, sunflower oil, canola (rapeseed) oil, corn oil, coconut oil, cottonseed oil, olive oil, palm oil, peanut oil, and safflower oil.

In a preferred aspect of the invention, the rubber composition includes silica. Commonly employed siliceous pigments which may be used in the rubber compound include for instance conventional pyrogenic and precipitated siliceous pigments (silica). In one embodiment, precipitated silica is used. The conventional siliceous pigments may be precipitated silicas such as, for example, those obtained by the acidification of a soluble silicate, e.g., sodium silicate. Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area is determined herein according to ASTM D5604 - 96 or equivalent. The conventional silica may also be characterized by having a dibutylphthalate (DBP) absorption value in a range of 100 cm³/100 g to 400 cm³/100 g, alternatively 150 cm³/100 g to 300 cm³/100 g which can be suitably determined according to ASTM D 2414 or equivalent. Various commercially available silicas may be used such as, silicas commercially available from PPG Industries under the Hi-Sil trademark with designations 210, 315G, EZ160G; silicas available from Solvay, with, for example, designations ZeoSil 1165 MP and ZeoSil Premium 200 MP; and silicas available from Evonik AG with, for example, designations VN2 and Ultrasil 6000GR, 9100GR.

In a preferred aspect of the invention, the rubber composition may comprise pre-silanized and precipitated silica which may for instance have a CTAB adsorption surface area of between 130 m²/g and 210 m²/g, optionally between 130 m²/g and 150 m²/g and/or between 190 m²/g and 210 m²/g, or even between 195 m²/g and 205 m²/g. The CTAB (cetyl trimethyl ammonium bromide) method for determination of the silica surface area (ASTM D6845) is known to a person skilled in the art.

In a preferred aspect of the invention, surface-modified precipitated silica which is treated prior to its addition to the rubber composition with at least one silane or silazane is employed. Suitable surface modification agents include but are not limited to alkylsilanes, alkoxysilanes, organoalkoxysilyl polysulfides, organomercaptoalkoxysilanes, and hexamethyldisilazane.

Silica dispersing aids, which optionally can be used, can be present in an amount ranging from 0.1% to 25% by weight, based on the weight of the silica, with 0.5% to 20% by weight being suitable, and 1% to 15% by weight based on the weight of the silica also being suitable.

Various pre-treated precipitated silicas are described in United States Patent 4,704,414, United States Patent 6,123,762 and United States Patent 6,573,324.

Some examples of pre-treated silicas (i.e. silicas that have been pre-surface treated with a silane) which are suitable for use in the practice of this invention include Ciptane^{®} 255 LD and Ciptane^{®} LP (PPG Industries) silicas that have been pre-treated with a mercaptosilane, and Coupsil^{®} 8113 (Degussa) that is the product of the reaction between organosilane bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries. Some representative examples of preferred pre-silanized precipitated silicas include Agilon^{®} 400, Agilon^{®} 454 and Agilon^{®} 458 from PPG Industries.

A representative silica coupler (silica coupling agent) having a moiety reactive with hydroxyl groups on pre-silanized precipitated silica and on precipitated silica and another moiety interactive with said elastomers, may comprised, for example:
(A) bis(3-trialkoxysilylalkyl) polysulfide containing an average in range of from 2 to 4, alternatively from 2 to 2.6 or from 3.2 to 3.8, sulfur atoms in its connecting bridge, or
(B) an alkoxyorganomercaptosilane, or (C) their combination. A representative example of such bis(3-trialkoxysilylalkyl) polysulfide is bis(3-triethoxysilylpropyl) polysulfide. As indicated, for the pre-silanized precipitated silica, the silica coupler may be desirably an alkoxyorganomercaptosilane. For the non-pre-silanized precipitated silica, the silica coupler may be or comprise the bis(3-triethoxysilylpropyl) polysulfide.

In a preferred aspect of the invention, the rubber composition is exclusive of addition of silica coupler to the rubber composition (thereby exclusive of silica coupler).

As indicated, in a preferred embodiment, the rubber composition may contain a combination of additional silica coupler added to the rubber composition, particularly a bis(3-triethoxysilylpropyl) polysulfide containing an average of from 2 to 4 connecting sulfur atoms in its polysulfidic bridge together with an additional precipitated silica (non-pre-silanized precipitated silica) added to said rubber composition, wherein the ratio of pre-silanized precipitated silica to said precipitated silica is desirably at least 8/1, alternately at least 10/1.

In a preferred aspect of the invention, the rubber composition may include carbon black. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 g/kg to 145 g/kg and a DBP number ranging from 34 cm³/100 g to 150 cm³/100 g. Iodine absorption values can be suitably determined according to ASTM D1510 or equivalent. Commonly employed carbon blacks can be used as a conventional filler in an amount ranging from 10 phr to 150 phr. However, in a preferred embodiment the composition comprises at most 10 phr of carbon black, preferably at most 5 phr of carbon black, as preferred embodiments are directed to high silica compounds and the improvement of their properties.

In a preferred aspect of the invention, other fillers may be used in the rubber composition including particulate fillers including ultra high molecular weight polyethylene (UHMWPE), crosslinked particulate polymer gels including those disclosed in United States Patent 6,242,534, United States Patent 6,207,757, United States Patent 6,133,364, United States Patent 6,372,857, United States Patent 5,395,891, or United States Patent 6,127,488, and a plasticized starch composite filler including but not limited to that disclosed in United States Patent 5,672,639. Syndiotactic polybutadiene may also be utilized. Such other fillers may be used in an amount ranging from 1 phr to 30 phr.

In a preferred aspect of the invention, the rubber composition may contain a conventional sulfur containing organosilicon compounds or silanes. Examples of suitable sulfur containing organosilicon compounds are of the formula:

Z - Alk - Sn - Alk - Z I

in which Z is selected from the group consisting of 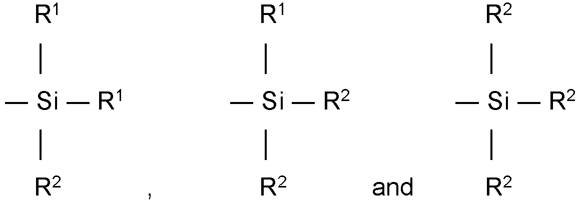 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 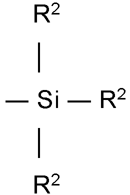 where R² is an alkoxy of 2 to 4 carbon atoms, alternatively 2 carbon atoms; Alk is a divalent hydrocarbon of 2 to 4 carbon atoms, alternatively of 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 20 phr. In one embodiment, the amount will range from 1 phr to 10 phr.

In a preferred aspect of the invention, the rubber composition comprises less than 0.1 phr cobalt salt or 0 phr cobalt salt.

It is readily understood by those having skill in the art that the rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants, antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively with a range of from 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, are typically employed at a level which is within the range of 1 phr to 5 phr. Often microcrystalline waxes are used. Typical amounts of peptizers, if used, are normally within the range of 0.1 phr to 1 phr. Typical peptizers may be, for example, pentachlorothiophenol and/or dibenzamidodiphenyl disulfide.

Accelerators may be preferably but not necessarily used to control the time and/or temperature required for vulcanization and to improve the properties of the vulcanizate. In one embodiment, a single accelerator system may be used, i.e. primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be from 1 to 20 minutes.

In a preferred aspect of the invention, the tire comprising the rubber composition is a tire comprising one or more rubber components selected from a tread, a shearband, rubber spokes, an undertread, a sidewall, an apex, a flipper, a chipper, a chafer, a carcass, a belt, an overlay, wherein one or more of the rubber components comprise the rubber composition. In a preferred embodiment the tire has a tread comprising the rubber composition. In a preferred embodiment the tire has a tread with one or more tread cap layers, wherein the rubber composition in accordance with the invention is in one or more of the two radially outermost tread cap layers, preferably in the radially outermost tread cap layer.

In another embodiment, the rubber composition is in a tread cap layer radially inside of the radially outermost tread cap layer. The rubber composition in accordance with the invention is then optionally not in the radially outermost tread cap layer. In such an embodiment a radially outermost tread cap layer does not comprise the rubber composition according to the invention. In contrast, the rubber composition of a tread cap layer radially below the radially outermost tread cap layer has the rubber composition according to the invention (or one or more of its embodiments). Such an arrangement or configuration can help to maintain the grip level, in particular wet grip at a similar level when the first tread cap layer is worn and radial rib or block heights of the tread have decreased. Then the loss of tread height can be at least partially compensated by the advanced grip of the rubber composition according to the present invention.

Vulcanization of the pneumatic tire of the present invention may for instance be carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. However, it is generally preferred for the tires of this invention to be cured at a temperature ranging from 132°C to 166° C. It is more typical for the tires of this invention to be cured at a temperature ranging from 143°C to 154°C. Such tires can be built, shaped, molded and cured by various methods which are known and are readily apparent to those having skill in such art.

### Brief description of the drawings

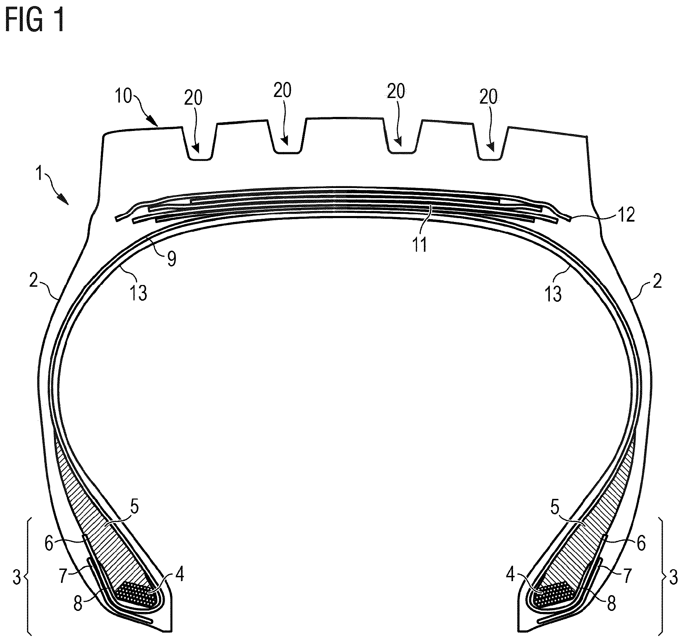

The structure, operation, and advantages of the invention will become more apparent upon contemplation of the following description taken in conjunction with the accompanying drawings, wherein Figure 1 is a schematic cross section of a tire comprising a rubber component with the rubber composition in accordance with an embodiment of the present invention.

### Detailed Description of Preferred Embodiments of the Invention

Figure 1 is a schematic cross-section of a tire 1 according to an embodiment of the invention. The tire 1 has a plurality of tire components such as a tread 10, an innerliner 13, a belt comprising four belt plies 11, a carcass ply 9, two sidewalls 2, and two bead regions 3, bead filler apexes 5 and beads 4. The example tire 1 is suitable, for example, for mounting on a rim of a vehicle, e.g. a truck or a passenger car. As shown in Figure 1, the belt plies 11 may be covered by an overlay ply 12 and/or may include one or more breaker plies. The carcass ply 9 includes a pair of axially opposite end portions 6, each of which is associated with a respective one of the beads 4. Each axial end portion 6 of the carcass ply 9 may be turned up and around the respective bead 4 to a position to anchor each axial end portion 6. The turned-up portions 6 of the carcass ply 9 may engage the axial outer surfaces of two flippers 8 and axial inner surfaces of two chippers 7 which are also considered as tire components. As shown in Figure 1, the example tread 10 may have circumferential grooves 20, each groove 20 essentially defining a U-shaped opening in the tread 10. The main portion of the tread 10 may be formed of one or more tread compounds. Moreover, the grooves 20, in particular the bottoms and/or sidewalls of the grooves 20 could be reinforced by a rubber compound having a higher hardness and/or stiffness than the remaining tread compound. Such a reinforcement may be referred to herein as a groove reinforcement.

While the embodiment of Figure 1 suggests a plurality of tire components including for instance apexes 5, chippers 7, flippers 8 and overlay 12, such and further components are not mandatory for the invention. Also, the turned-up end of the carcass ply 9 is not necessary for the invention or may pass on the opposite side of the bead area 3 and end on the axially inner side of the bead 4 instead of the axially outer side of the bead 4. The tire could also have for instance a different number of grooves 20, e.g. less than four grooves.

In an embodiment, the tread 10 of the tire 1 or of another tire comprises a rubber composition according to the Inventive Example as identified in Table 1 below. The rubber composition in accordance with a preferred embodiment of the invention is used in a tread or tread layer contacting the road.

**Table 1**

| **Material** | (phr) | |
|---|---|---|
| | Comparative Example | Inventive Example |
| SSBR 1¹ | 30 | 30 |
| SSBR 2² | 50 | 50 |
| Polyisoprene³ | 20 | 20 |
| Resin 1⁴ | 22 | 0 |
| Resin 2⁵ | 0 | 22 |
| Aluminum hydroxide⁶ | 10 | 10 |
| Silica⁷ | 60 | 60 |
| Silane 1⁸ | 7.2 | 7.2 |
| Silane 2⁹ | 1 | 1 |
| Stearic Acid | 2.5 | 2.5 |
| Waxes | 2.3 | 2.3 |
| Zinc Oxide | 2 | 2 |
| Antidegradants¹⁰ | 6.3 | 6.3 |
| Sulfur | 1 | 1 |
| BDBzTH¹¹ | 2.2 | 2.2 |
| Further Curatives¹² | 3 | 3 |
| Carbon black | 1 | 1 |

| | | |
|---|---|---|
| ¹ as Sprintan^{™} SLR 3402 from Trinseo, having a Tg of -62°C and a thiol-alkoxysilane functionalization ² as HPR 355H from JSR, having a Tg of about -27°C and an aminosilane functionalization ³ natural rubber ⁴ Dercolyte^{™} A115 from DRT, having a Tg of about 70°C ⁵ as Oppera^{™} 383 from Exxon Mobil ,having Tg of about 54°C ⁶ Al(OH)₃ having a BET surface area of 15 m²/g, d50 of 0.4 µm, d90 of 0.8 µm, and d10 of 0.3 µm, and a material density of 2.4 g/cm³ ⁷ as Zeosil^{™} Premium 200MP from Solvay, having a BET surface area of 215 m²/g ⁸ bis-triethoxysilylpropyl disulfide ⁹ bis-triethoxysilylpropyl tetrasulfide ¹⁰ based on dihydroquinolines and phenylenediamines ¹¹ 1,6-bis(N,N-dibenzylthiocarbamoyldithio)hexane as Vulcuren^{™} from the company Lanxess, including about 10% oil and carbon black ¹² TBBS and DPG types | | |

Table 2 shows tire properties obtained on the basis of the Comparative Example and the Inventive Example listed above in Table 1. As apparent from the below results, wet grip and tread wear are surprisingly significantly improved for the Inventive Example, by change of the resin type. Moreover, wet grip stays flat so that the overall balance of these properties has been improved according to Inventive Example 1.

**Table 2**

| **Property** | Comparative Example | Inventive Example |
|---|---|---|
| Rolling resistance ^{a} | 100 | 107 |
| Wet handling ^{b} | 100 | 100 |
| Tread wear ^{c} | 100 | 107 |

| | | |
|---|---|---|
| ^{a} Laboratory test, results in percent, normalized to the Comparative Example, based on dynamical mechanical analysis (DMA) of tangent delta shear response at 30°C ^{b} Laboratory test, results in percent, normalized to the Comparative Example, based on the determination of a transmittable friction force on a linear friction tester ^{c} Laboratory test, results in percent, normalized to the Comparative Example, based on abrasion determined according to ASTM D5963 | | |

## Claims

1. A tire comprising a rubber composition, the rubber composition comprising:
70 phr to 100 phr of at least one styrene butadiene rubber,
0 phr to 30 phr of at least one further diene-based rubber,
from 40 phr to 200 phr of at least one filler,
at least 5 phr of aluminum hydroxide, and
at least 10 phr of at least one hydrocarbon resin selected from one or more of DCPD resins, CPD resins, and C5 resins.

2. The tire according to claim 1 wherein the rubber composition comprises from 5 phr to 80 phr of the aluminum hydroxide; and/or wherein the rubber composition comprises from 15 phr to 80 phr of the hydrocarbon resin.

3. The tire according to claim 1 or 2 wherein the hydrocarbon resin is a hydrogenated hydrocarbon resin and/or wherein the hydrocarbon resin is a aromatically modified.

4. The tire according to at least one of the previous claims wherein the resin has a glass transition temperature within a range of from 35°C to 65°C, as determined according to ASTM D6604.

5. The tire according to at least one of the previous claims wherein the at least one styrene butadiene rubber is a solution polymerized styrene butadiene rubber and wherein the at least one diene-based rubber is synthetic polyisoprene, natural rubber or both.

6. The tire according to claim 5 wherein the at least one styrene butadiene rubber comprises (i) a first styrene butadiene rubber having a glass transition temperature within a range of from -51°C to -86°C, and (ii) a second styrene butadiene rubber having a glass transition temperature within a range of from -10°C to -45°C; and, optionally, wherein at least one of said first and second styrene butadiene rubbers is functionalized for the coupling to silica.

7. The tire according to at least one of the previous claims wherein the filler predominantly comprises silica; and/or wherein the filler comprises less than 10 phr carbon black and at least 40 phr of silica.

8. The tire according to at least one of the previous claims wherein the rubber composition comprises at most 85 phr of silica.

9. The tire according to at least one of the previous claims wherein the aluminum hydroxide has one or both of the following features: (i) a D50 particle diameter within a range of from 0.2 µm to 5 µm, (ii) a BET surface area within a range of from 1 m²/g to 20 m²/g, wherein the particle diameters and the BET surface area are determined according to the methods as disclosed in the description.

10. The tire according to at least one of the previous claims wherein the silica has a BET surface area within a range of from 150 m²/g to 220 m²/g.

11. The tire according to at least one of the previous claims comprising one or both of: (i) 0 phr to less than 5 phr of further resins apart from said hydrocarbon resin; and (ii) 0 phr to less than 5 phr of oil.

12. The tire according to at least one of the previous claims wherein the resin has an aromatic proton content within a range of 8% to 12%; and/or wherein the resin has a softening point within a range of from 88°C to 110°C, wherein the aromatic proton content and the softening point are measured according to the methods as disclosed in the description.

13. The tire according to at least one of the previous claims wherein one of the first and second styrene butadiene rubbers is functionalized with at least one thiol group; and wherein another one of the first and second styrene butadiene rubbers is functionalized with at least one of an amino silane or amino siloxane group.

14. The tire according to at least one of the previous claims having a tread with a radially outermost tread cap layer, wherein the radially outermost tread cap layer comprises said rubber composition.

## Patentansprüche

1. Reifen, der eine Kautschukzusammensetzung umfasst; wobei die Kautschukzusammensetzung Folgendes umfasst:
von 70 ThK bis 100 ThK mindestens eines Styrol-Butadien-Kautschuks ;
von 0 ThK bis 30 ThK mindestens eines zusätzlichen Kautschuks auf Basis von einem Dien ;
von 40 ThK bis 200 ThK mindestens eines Füllstoffs;
mindestens 5 ThK Aluminiumhydroxid; und
mindestens 10 ThK mindestens eines Kohlenwasserstoffharzes, das aus einem oder mehreren Harzen ausgewählt ist, nämlich DCPD-Harzen, CPD-Harzen und C₅-Harzen .

2. Reifen nach Anspruch 1, wobei die Kautschukzusammensetzung von 5 ThK bis 80 ThK Aluminiumhydroxid umfasst; und/oder wobei die Kautschukzusammensetzung von 15 ThK bis 80 ThK Kohlenwasserstoffharz umfasst.

3. Reifen nach Anspruch 1 oder 2, wobei das Kohlenwasserstoffharz ein hydriertes Kohlenwasserstoffharz darstellt und/oder wobei das Kohlenwasserstoffharz mit einer aromatischen Gruppe modifiziert worden ist.

4. Reifen nach mindestens einem der vorhergehenden Ansprüche, wobei das Harz eine Glasübergangstemperatur aufweist, die innerhalb eines Bereichs von 35 °C bis 65 °C liegt, wie in Übereinstimmung mit ASTM D6604 bestimmt.

5. Reifen nach zumindest einem der vorhergehenden Ansprüche, wobei der zumindest eine Styrol-Butadien-Kautschuk einen Styrol-Butadien-Kautschuk darstellt, der in Lösung polymerisiert wurde, und wobei der zumindest eine Kautschuk auf Basis eines Diens ein synthetisches Polyisopren, Naturkautschuk oder beides darstellt.

6. Reifen nach Anspruch 5, wobei der zumindest eine Styrol-Butadien-Kautschuk Folgendes umfasst: (i) einen ersten Styrol-Butadien-Kautschuk, der eine Glasübergangstemperatur aufweist, die in einem Bereich von -51 °C bis -86 °C liegt, und (ii) einen zweiten Styrol-Butadien-Kautschuk, der eine Glasübergangstemperatur aufweist, die in einem Bereich von -10 °C bis -45 °C liegt ; und wobei optional mindestens ein Kautschuk, der aus dem ersten genannten und dem zweiten Styrol-Butadien-Kautschuk ausgewählt ist, zur Kupplung mit Silica funktionalisiert ist.

7. Reifen nach mindestens einem der vorhergehenden Ansprüche, wobei der Füllstoff hauptsächlich Silica umfasst; und/oder wobei der Füllstoff weniger als 10 ThK Ruß und weniger als 40 ThK Silica umfasst.

8. Reifen nach mindestens einem der vorhergehenden Ansprüche, wobei die Kautschukzusammensetzung höchstens 85 ThK Silica umfasst.

9. Reifen nach mindestens einem der vorhergehenden Ansprüche, wobei das Aluminiumhydroxid eines oder beide der nachstehend angegebenen Merkmale aufweist, nämlich: (i) einen Teilchendurchmesser D50, der innerhalb eines Bereichs von 0,2 µm bis 5 µm liegt, (ii) eine BET-Oberfläche, die innerhalb eines Bereichs von 1 m²/g bis 20 m²/g liegt; wobei die Teilchendurchmesser und die BET-Oberflächen in Übereinstimmung mit den Verfahren, wie sie in der Beschreibung offenbart sind, bestimmt werden.

10. Reifen nach mindestens einem der vorhergehenden Ansprüche, wobei Silica eine BET-Oberfläche aufweist, die innerhalb des Bereichs von 150 m²/g bis 220 m²/g liegt.

11. Reifen nach mindestens einem der vorhergehenden Ansprüche, der eines oder beide der folgenden Elemente umfasst: (i) von 0 ThK bis weniger als 5 ThK zusätzliche Harze neben dem genannten Kohlenwasserstoffharz; (ii) von 0 ThK bis weniger als 5 ThK eines Öls.

12. Reifen nach mindestens einem der vorhergehenden Ansprüche, wobei das Harz einen Gehalt an aromatischen Protonen aufweist, der in einem Bereich von 8 % bis 12 % liegt; und/oder wobei das Harz einen Erweichungspunkt aufweist, der in einem Bereich von 88 °C bis 110 °C liegt; wobei der Gehalt an aromatischen Protonen und der Erweichungspunkt in Übereinstimmung mit den Verfahren, wie sie in der Beschreibung dargestellt sind, gemessen werden.

13. Reifen nach mindestens einem der vorhergehenden Ansprüche, wobei ein Kautschuk, ausgewählt aus dem ersten und zweiten Styrol-Butadien-Kautschuk, mit mindestens einer Thiolgruppe funktionalisiert ist; und wobei ein anderer Kautschuk, ausgewählt aus dem ersten und zweiten Styrol-Butadien-Kautschuk, mit mindestens einer Gruppe funktionalisiert ist, die aus einer Aminosilangruppe oder einer Aminosiloxangruppe ausgewählt ist.

14. Reifen nach mindestens einem der vorhergehenden Ansprüche, der eine Lauffläche hat, die eine Schicht in Form eines Laufstreifens der Lauffläche umfasst, die in der radialen Richtung am äußersten aufgebracht ist; wobei die Schicht in Form eines Laufstreifens der Lauffläche, die in der radialen Richtung am äußersten aufgebracht ist, die Kautschukzusammensetzung umfasst.

## Revendications

1. Bandage qui comprend une composition à base de caoutchouc ; dans lequel la composition à base de caoutchouc comprend :
de 70 phr à 100 phr d'au moins un caoutchouc de styrène butadiène ;
de 0 phr à 30 phr d'au moins un caoutchouc supplémentaire à base d'un diène ;
de 40 phr à 200 phr d'au moins une matière de charge ;
au moins 5 phr d'hydroxyde d'aluminium ; et
au moins 10 phr d'au moins une résine d'hydrocarbure qui est choisi parmi une ou plusieurs résines, à savoir des résines DCPD, des résines CPD et des résines en C₅.

2. Bandage selon la revendication 1, dans lequel la composition de caoutchouc comprend de 5 phr à 80 phr de l'hydroxyde d'aluminium ; et/ou dans lequel la composition de caoutchouc comprend de 15 phr à 80 phr de la résine d'hydrocarbure.

3. Bandage selon la revendication 1 ou 2, dans lequel la résine d'hydrocarbure représente une résine d'hydrocarbure hydrogénée et/ou dans laquelle la résine d'hydrocarbure a été modifiée avec un groupe aromatique.

4. Bandage selon au moins une des revendications précédentes, dans lequel la résine possède une température de transition vitreuse qui se situe au sein d'une plage allant de 35 °C à 65 °C, comme déterminé en conformité avec la norme ASTM D6604.

5. Bandage selon au moins une des revendications précédentes, dans lequel ledit au moins un caoutchouc de styrène butadiène représente un caoutchouc de styrène butadiène qui a été polymérisé en solution et dans laquelle ledit au moins un caoutchouc à base d'un diène représente un polyisoprène synthétique, du caoutchouc naturel ou les deux.

6. Bandage selon la revendication 5, dans lequel ledit au moins un caoutchouc de styrène butadiène comprend (i) un premier caoutchouc de styrène butadiène qui possède une température de transition vitreuse qui se situe au sein d'une plage allant de -51 °C à - 86 °C et (ii) un deuxième caoutchouc de styrène butadiène qui possède une température de transition vitreuse qui se situe au sein d'une plage allant de -10 °C à -45 °C ; et de manière facultative dans lequel au moins un caoutchouc choisi parmi ledit premier ledit et ledit deuxième caoutchouc de styrène butadiène est fonctionnalisé pour le couplage à de la silice.

7. Bandage selon au moins une des revendications précédentes, dans lequel la matière de charge comprend de la silice à titre principal ; et/ou dans lequel la matière de charge comprend moins de 10 phr de noir de carbone et au moins 40 phr de silice.

8. Bandage selon au moins une des revendications précédentes, dans lequel la composition de caoutchouc comprend au maximum 85 phr de silice.

9. Bandage selon au moins une des revendications précédentes, dans lequel l'hydroxyde d'aluminium possède une des caractéristiques indiquées ci-après ou les deux, à savoir : (i) un diamètre de particule D50 qui se situe au sein d'une plage allant de 0,2 µm à 5 µm, (ii) une aire de surface BET qui se situe au sein d'une plage allant de 1 m²/g à 20 m²/g ; dans lequel les diamètres des particules et les aires de surface BET sont déterminés en conformité avec les procédés tels qu'ils sont révélés dans la description.

10. Bandage selon au moins une des revendications précédentes, dans lequel la silice possède une aire de surface BET qui se situe au sein d'une plage allant de 150 m²/g à 220 m²/g.

11. Bandage selon au moins une des revendications précédentes qui comprend un des éléments repris ci-après ou les deux, à savoir : (i) de 0 phr à moins de 5 phr de résines supplémentaires en dehors de ladite résine d'hydrocarbure ; (ii) de 0 phr à moins de 5 phr d'une huile.

12. Bandage selon au moins une des revendications précédentes, dans lequel la résine possède une teneur en protons aromatiques qui se situe au sein d'une plage représentant de 8 % à 12 % ; et/ou dans laquelle la résine possède un point de ramollissement qui se situe dans une plage allant de 88 °C à 110 °C ; dans lequel la teneur en protons aromatiques et le point de ramollissement sont mesurés en conformité avec les procédés tels qu'ils sont révélés dans la description.

13. Bandage selon au moins une des revendications précédentes, dans lequel un caoutchouc choisi parmi le premier et le deuxième caoutchouc de styrène butadiène est fonctionnalisé avec au moins un groupe thiol ; et dans lequel un autre caoutchouc choisi parmi le premier et le deuxième caoutchouc de styrène butadiène est fonctionnalisé avec au moins un groupe qui est choisi parmi un groupe amino silane ou un groupe amino siloxane.

14. Bandage selon au moins une des revendications précédentes, qui possède une bande de roulement qui comprend une couche sous la forme d'une chape de bande de roulement, la plus externe dans la direction radiale ; dans lequel la couche sous la forme d'une chape de bande de roulement, la plus externe dans la direction radiale comprend ladite composition de caoutchouc.
